# EUROPEAN PATENT APPLICATION

(11) **EP 4 793 252 A1**
(43) Date of publication of application: **19.08.2026**
(21) Application number: 24877296.4
(22) Date of filing: 11.10.2024
(51) Int. Cl.: C04B 28/02, C04B 14/10, C04B 22/08, C04B 24/12, C04B 24/26

(54) **HYDRAULIC COMPOSITION**

(30) Priority: 13.10.2023 JP 2023177869
(71) Applicant: Kao Corporation, Tokyo 103-8210 (JP)
(72) Inventor: SHIMADA, Kohei, Tokyo 103-8210 (JP); KAWAKAMI, Hiroyuki, Tokyo 103-8210 (JP); TANAKA, Shunya, Tokyo 103-8210 (JP); NAGOSHI, Yuto, Tokyo 103-8210 (JP); SAGAWA, Keiichirou, Tokyo 103-8210 (JP)
(74) Representative: Hoffmann Eitle
(86) International application number: PCT/JP2024/036505
(87) International publication number: WO 2025/079702

(57) **Abstract**

A hydraulic composition containing the following component (A), component (B), component (C), and component (D),
component (A): a hydraulic powder [excluding those that fall under component (B)],
component (B): a calcined clay,
component (C): a compound represented by the following general formula (c1) or a salt thereof, 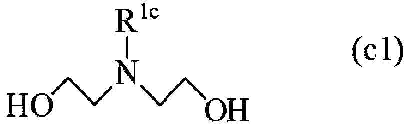 wherein R^{1c} represents a hydrogen atom, a hydrocarbon group with 1 or more and 4 or less carbons, or a hydroxyalkyl group with 2 or more and 4 or less carbons, and
component (D): a polycarboxylic acid-based dispersant.

## Description

### Field of the Invention

The present invention relates to a hydraulic composition, a method for producing a hydraulic composition, and a strength enhancing agent for a hydraulic composition.

### Background of the Invention

Cement concrete is an indispensable construction material for the development of humankind, which is produced by mixing Portland cement as a main component with water, fine aggregates, and coarse aggregates, followed by molding and hardening.

Portland cement is produced using, as a main raw material, cement clinker obtained by drying and mixing limestone, clay, silica stone, and iron raw materials or the like, followed by calcination, and a large amount of CO₂ is emitted due to decarboxylation of limestone in the calcination process. In recent years, as part of efforts to reduce CO₂ emissions in the cement industry, the promotion of spread of blended cement has been investigated, which is obtained by mixing minerals, slag, or ash exhibiting (latent) hydraulic properties, or the like, instead of cement clinker.

Examples of mixed materials to be mixed into blended cement, i.e., minerals, slag, or ash exhibiting (latent) hydraulic properties, or the like include, for example, those that have pozzolanic properties (fly ash, silica fume, volcanic ash, silicate clay, or calcined clay), those that have latent hydraulic properties (for example, blast furnace slag), those that react with C3A (tricalcium aluminate) or C4AF (tetracalcium aluminoferrite) (for example, limestone), or the like.

JP-A 2023-521727 discloses a composition of partially protonated alkanolamines, comprising from 10 to 99 wt.% of a secondary or tertiary alkanolamine in the form of a salt, preferably in the form of an inorganic acid salt, and from 1 to 90 wt.% of a non-salified alkanolamine, and use in a mill, the composition allowing the stabilization of the alkanolamines and enabling control over grinding aid performance, thereby maintaining properties of enhanced compressive strength, particularly 28-day strength.

### Summary of the Invention

However, a hydraulic composition including calcined clay has had such a problem that, compared with a hydraulic composition not formulated with calcined clay, the addition amount of a cement dispersant required to obtain the same level of fluidity (workability) is increased, and the cement dispersant excessively added inhibits the cement hydration reaction, causing setting retardation (reduced early strength).

The present invention provides a hydraulic composition including a calcined clay, a method for producing the hydraulic composition, and a strength enhancing agent for a hydraulic composition, alleviating setting retardation properties.

In an embodiment, the present invention provides a hydraulic composition containing the following component (A), component (B), component (C), and component (D),
component (A): a hydraulic powder [excluding those that fall under component (B)],
component (B): a calcined clay,
component (C): a compound represented by the following general formula (c1) or a salt thereof, 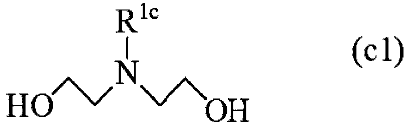
wherein R^{1c} represents a hydrogen atom, a hydrocarbon group with 1 or more and 4 or less carbons, or a hydroxyalkyl group with 2 or more and 4 or less carbons, and
component (D): a polycarboxylic acid-based dispersant.

Further, in another embodiment, the present invention provides a hydraulic composition formulated with the above component (A), component (B), component (C), and component (D).

Further, in another embodiment, the present invention provides a method for producing a hydraulic composition, including mixing the above component (A), component (B), component (C), and component (D).

Further, in another embodiment, the present invention provides a strength enhancing agent for a hydraulic composition containing (A) a hydraulic powder and (B) a calcined clay, the agent including a compound represented by the above general formula (c1) or a salt thereof.

The present invention provides a hydraulic composition including a calcined clay, a method for producing the hydraulic composition, and a strength enhancing agent for a hydraulic composition, alleviating setting retardation properties.

### Embodiments of the Invention

In recent years, SDGs have been advocated for the realization of a sustainable society. The present invention is helpful to improvement in the workability of hydraulic compositions using blended cement, and is considered to be a possible technology that contributes, for example, to SDGs Nos. 9, 11, 12, 13, and the like.

The present inventors have found that setting retardation properties of a hydraulic composition slurry produced using a blended cement including a calcined clay are alleviated by adding a compound as component (C) when mixing or grinding clinker or Portland cement and the calcined clay. Although the reason why such an effect is exhibited is not necessarily clear, it is presumed as follows.

Reduced fluidity of the slurry produced using the blended cement including the calcined clay is considered to be due to electrostatic aggregation of the cement and the calcined clay, which is initiated by cationic sites formed by metal cations typified by calcium ions present on the surface of the cement's particles, and silanol hydroxyl groups present on the surface of the calcined clay which are ionized and negatively charged under basic conditions. Therefore, in order to loosen this aggregated structure and improve the fluidity of the slurry produced using the blended cement including the calcined clay, it is necessary to add a dispersant in an amount exceeding that required to improve the fluidity of a slurry produced using the cement alone. It is considered that the excess dispersant's molecules adsorb onto the cationic sites on the surface of the cement's particles, thereby hindering exchange of metal ions in the vicinity of the cement's particles, and consequently, growth of hydration products, leading to setting retardation of the cement.

It is considered that the compound as component (C) of the present invention has a diethanolamine skeleton capable of blocking the cationic sites on the surface of the cement's particles by a chelating effect, thereby making it difficult for the excess cement dispersant to adsorb onto the cationic sites on the surface of the cement's particles, and has appropriate hydrophilicity and hydrophobicity, thereby serving as an intermediary between the dispersant and the cement's particles, thus achieving both hydration reactivity of the cement and dispersibility of the cement's particles.

Further, it is considered that the reason why the effect of a combined use of a polycarboxylic acid-based cement dispersant as component (D) is particularly large is that polycarboxylic acid-based dispersants have carboxyl groups having high adsorptivity onto calcium cationic sites of the calcium silicates which make the most significant contribution to setting of the cement. Furthermore, it is considered that the reason why a particularly remarkable effect is obtained in the system formulated with the calcined clay is that calcined clay is composed of aluminosilicate and is less likely to form the cationic sites by metal cations onto which the compound as component (C) of the present invention or the polycarboxylic acid-based cement dispersant adsorbs, and thus is less likely to inhibit the above effects of the compound as component (C) of the present invention.

Note that the hydraulic composition, the method for producing a hydraulic composition, and the strength-enhancing agent for a hydraulic composition of the present invention are not limited in any way by this mechanism.

### <Hydraulic composition>

In an exemplary embodiment, the hydraulic composition of the present invention contains the following component (A), component (B), component (C), and component (D),
component (A): a hydraulic powder [excluding those that fall under component (B)],
component (B): a calcined clay,
component (C): a compound represented by the following general formula (c1) or a salt thereof, 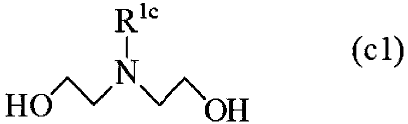
wherein R^{1c} represents a hydrogen atom, a hydrocarbon group with 1 or more and 4 or less carbons, or a hydroxyalkyl group with 2 or more and 4 or less carbons, and
component (D): a polycarboxylic acid-based dispersant.

### <Component (A)>

Component (A) is a hydraulic powder. The hydraulic powder is powder that hardens when mixed with water, and examples thereof include, for example, ordinary Portland cement, high early strength Portland cement, ultra high early strength Portland cement, sulfate-resisting Portland cement, low-heat Portland cement, white Portland cement, or eco-cement (for example, JIS R 5214 or the like). Among these, cement selected from high early strength Portland cement, ordinary Portland cement, sulfate-resisting Portland cement, and white Portland cement is preferable, and cement selected from early strength Portland cement and ordinary Portland cement is more preferable from the viewpoint of shortening the time to reach a required strength of the hydraulic composition.

Further, the hydraulic powder may include blast furnace slag, fly ash, silica fume, anhydrous gypsum, or the like, and may also include non-hydraulic fine limestone powder or the like. Blast furnace cement, fly ash cement, or silica fume cement obtained by mixing cement with blast furnace slag, fly ash, silica fume, or the like may be used as the hydraulic powder.

Further, examples of the hydraulic powder include cement or a mixed powder of cement and bentonite.

Component (A) is preferably cement clinker or cement, more specifically cement clinker or Portland cement from the viewpoint of allowing the effects of the present invention to be more fully realized.

### <Component (B)>

Component (B) is a calcined clay. The calcined clay may be obtained by heat-treating the following clay mineral in a high-temperature furnace under the conditions of 700°C or more and 1200°C or less and 1 hour or more and 24 hours or less.

The clay mineral of component (B) is a mineral material exhibiting clayey properties, and is composed of a mineral composition including quartz, feldspar, or other clay-based raw materials or the like. Those that include, as constituent minerals, kaolinite as a main constituent, and pyrophyllite, halloysite, montmorillonite, illite, or bentonite are preferable. Among these, a clay mineral including kaolinite or pyrophyllite is preferable from the viewpoint of strength development properties of the hydraulic composition.

The average particle size of component (B) is preferably 1 µm or more, more preferably 2.5 µm or more, further preferably 5 µm or more from the viewpoint of handleability, and preferably 25 µm or less, more preferably 20 µm or less, further preferably 15 µm or less from the viewpoint of strength of a hardened product of the hydraulic composition.

For the average particle size of component (B), granularity distribution measurements are taken using a laser diffraction/scattering particle size distribution measuring device (LA-920, manufactured by HORIBA, Ltd.) and using ethanol (95) (manufactured by FUJIFILM Wako Pure Chemical Corporation) as a dispersion medium, and the arithmetic average size is recorded as the average particle size (µm).

### <Component (C)>

Component (C) is a compound represented by the above general formula (c1) or a salt thereof. Component (C) may be one or more selected from compounds represented by the general formula (c1) and salts thereof. The salt of the compound represented by the above general formula (c1) is not particularly limited, but is preferably a halide or a carboxylate, more preferably a chloride, an acetate, a lactate, or a salt with component (D) described below.

In the general formula (c1), the hydrocarbon group with 1 or more and 4 or less carbons of R^{1c} is preferably a methyl group, an ethyl group, or a propyl group from the viewpoint of high early strength of the hydraulic composition.

Further, the hydroxyalkyl group with 2 or more and 4 or less carbons of R^{1c} is preferably a hydroxyethyl group or a hydroxypropyl group from the viewpoint of high early strength of the hydraulic composition.

Component (C) is preferably one or more selected from 1-[bis(2-hydroxyethyl)amino]-2-propanol, N-methyldiethanolamine, triethanolamine, and diethanolamine, more preferably one or more selected from 1-[bis(2-hydroxyethyl)amino]-2-propanol, triethanolamine, and N-methyldiethanolamine from the viewpoint of high early strength of the hydraulic composition.

In other words, in the general formula (c1), R^{1c} is preferably a hydroxyethyl group, a hydroxypropyl group, a methyl group, or a hydrogen atom, more preferably a hydroxypropyl group, a hydroxyethyl group, or a methyl group.

### <Component (D)>

Component (D) is a polycarboxylic acid-based dispersant.

The polycarboxylic acid-based dispersant is preferably a copolymer including monomer (1d) represented by the following general formula (1d) as a constituent monomer from the viewpoint of initial fluidity.

The polycarboxylic acid-based dispersant is more preferably a copolymer including monomer (1d) represented by the following general formula (1d) and monomer (2d) represented by the following general formula (2d) as constituent monomers, 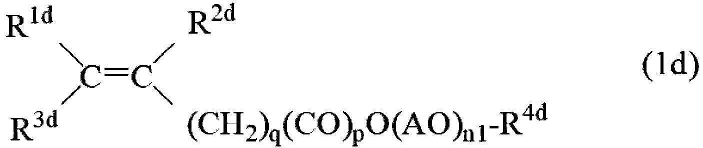 wherein
R^{1d} and R^{2d} may the same or different and each represent a hydrogen atom or a methyl group,
R^{3d} represents a hydrogen atom or - (CH₂)_{q}(CO)ₚO(AO)ₙ₁-R^{4d},
R^{4d} represents a hydrogen atom or an alkyl group with 1 or more and 4 or less carbons,
AO represents a group selected from an ethyleneoxy group and a propyleneoxy group,
n1 represents the average number of added moles of AO and a number of 1 or more and 300 or less,
q represents a number of 0 or more and 2 or less, and
p represents 0 or 1, and 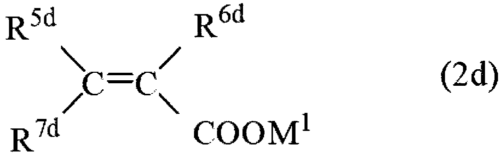
wherein
R^{5d}, R^{6d}, and R^{7d} may be the same or different and each represent a hydrogen atom, a methyl group, or (CH₂)ᵣCOOM², where (CH₂)ᵣCOOM² may form an anhydride with COOM¹ or another (CH₂)ᵣCOOM², and M¹ and M² in those groups are not present in that case,
M¹ and M² may be the same or different, and each represent a hydrogen atom, an alkali metal, an alkaline earth metal (1/2 atom), an ammonium group, an alkylammonium group, a substituted alkylammonium group, an alkyl group, a hydroalkyl group, or an alkenyl group, and r represents a number of 0 or more and 2 or less.

In the general formula (1d), R^{1d} is preferably a hydrogen atom from the viewpoint of high early strength of the hydraulic composition.

In the general formula (1d), R^{2d} is preferably a methyl group from the viewpoint of high early strength of the hydraulic composition.

In the general formula (1d), R^{3d} is preferably a hydrogen atom from the viewpoint of high early strength of the hydraulic composition.

In the general formula (1d), R^{4d} is preferably a hydrogen atom or a methyl group, more preferably a methyl group from the viewpoint of high early strength of the hydraulic composition. When the general formula (1d) includes more than one R^{4d}, they may be the same or different.

In the general formula (1d), AO is preferably an ethyleneoxy group from the viewpoint of high early strength of the hydraulic composition. AO preferably includes an ethyleneoxy group.

In the general formula (1d), n1 is the average number of added moles of AO, and is 1 or more, preferably 5 or more, more preferably 7 or more, and 300 or less, preferably 250 or less, more preferably 200 or less, further preferably 175 or less, furthermore preferably 150 or less, furthermore preferably 125 or less, furthermore preferably 100 or less from the viewpoint of high early strength of the hydraulic composition.

In the general formula (1d), q is preferably 0 from the viewpoint of high early strength of the hydraulic composition.

In the general formula (1d), p is preferably 1 from the viewpoint of high early strength of the hydraulic composition.

A sulfonic acid may be used as an acid catalyst when producing monomer (1d). For example, JP-A 2008-214638 describes such a method. When producing component (D) of the present invention, a mixture including monomer (1d) produced by such a method and a sulfonic acid can be used as-is unless the effects of the present invention are impaired.

In the general formula (2d), R^{5d} is preferably a hydrogen atom from the viewpoint of high early strength of the hydraulic composition.

In the general formula (2d), R^{6d} is preferably a methyl group from the viewpoint of high early strength of the hydraulic composition.

In the general formula (2d), R^{7d} is preferably a hydrogen atom from the viewpoint of high early strength of the hydraulic composition.

In the general formula (2d), the alkyl groups, hydroalkyl groups, and alkenyl groups of M¹ and M² each preferably have 1 or more and 4 or less carbons.

M¹ and M² may be the same or different, and each represent preferably a hydrogen atom, an alkali metal, an alkaline earth metal (1/2 atom), an ammonium group, or an alkylammonium group, more preferably a hydrogen atom, an alkali metal, an alkaline earth metal (1/2 atom), or an ammonium group, further preferably a hydrogen atom, an alkali metal, or an alkaline earth metal (1/2 atom), furthermore preferably a hydrogen atom or an alkali metal.

In the general formula (2d), r in (CH₂)ᵣCOOM² is preferably 1 from the viewpoint of high early strength of the hydraulic composition.

In the copolymer including monomer (1d) as a constituent monomer, the total amount of monomer (1d) in constituent monomers is preferably 90 mass% or more, more preferably 92 mass% or more, further preferably 95 mass% or more, and preferably 100 mass% or less from the viewpoint of high early strength of the hydraulic composition. This total amount may be 100 mass%.

In the copolymer including monomer (1d) and monomer (2d) as constituent monomers, the total amount of monomer (1d) and monomer (2d) in constituent monomers is preferably 90 mass% or more, more preferably 92 mass% or more, further preferably 95 mass% or more, and preferably 100 mass% or less from the viewpoint of high early strength of the hydraulic composition. This total amount may be 100 mass%.

In the copolymer including monomer (1d) and monomer (2d) as constituent monomers, the ratio of monomer (2d) in the total of monomer (1d) and monomer (2d) is preferably 40 mol% or more, and preferably 95 mol% or less, more preferably 92.5 mol% or less, further preferably 90 mol% or less from the viewpoint of fluidity retention properties of the hydraulic composition.

The weight average molecular weights of the polycarboxylic acid-based dispersant, more specifically the copolymer including monomer (1d) as a constituent monomer, and more specifically the copolymer including monomer (1d) and monomer (2d) as constituent monomers are preferably 20,000 or more, more preferably 30,000 or more, further preferably 40,000 or more, and preferably 100,000 or less, more preferably less than 100,000, further preferably 80,000 or less from the viewpoint of high early strength of the hydraulic composition.

The weight average molecular weights of the polycarboxylic acid-based dispersant, more specifically the copolymer including monomer (1d) as a constituent monomer, and more specifically the copolymer including monomer (1d) and monomer (2d) as constituent monomers are each measured according to a gel permeation chromatography (GPC) method under the following conditions.

### *GPC conditions

Instrument: GPC (HLC-8320GPC) manufactured by Tosoh Corporation
Column: G4000PWXL + G2500PWXL (manufactured by Tosoh Corporation)
Eluent: 0.2 M phosphate buffer/CH₃CN = 9/1
Flow rate: 1.0 mL/min
Column temperature: 40°C
Detection: RI
Sample size: 0.2 mg/mL
Reference materials: expressed in terms of polyethylene glycols (monodisperse polyethylene glycols with known molecular weights, molecular weights 250,000, 145,000, 87,500, 46,000, 24,000)

In the polycarboxylic acid-based dispersant, two or more dispersants having different average numbers of added moles of AO, ratios of monomer (1a) and/or monomer (2a), or the like may be used.

### <Composition and others>

The hydraulic composition of the present invention contains component (A) in an amount of preferably 40 parts by mass or more, more preferably 45 parts by mass or more, further preferably 50 parts by mass or more from the viewpoint of strength of a hardened product of the hydraulic composition, and preferably 99 parts by mass or less, more preferably 98 parts by mass or less, further preferably 95 parts by mass or less, furthermore preferably 90 parts by mass or less from the viewpoint of high early strength of the hydraulic composition, relative to 100 parts by mass of the total of component (A) and component (B) in the hydraulic composition.

The content of component (A) in the hydraulic composition of the present invention is preferably 40 mass% or more, more preferably 45 mass% or more, further preferably 50 mass% or more from the viewpoint of strength of a hardened product of the hydraulic composition, and preferably 99 mass% or less, more preferably 98 mass% or less, further preferably 95 mass% or less from the viewpoint of high early strength of the hydraulic composition.

The hydraulic composition of the present invention contains component (B) in an amount of preferably 1 part by mass or more, more preferably 2 parts by mass or more, further preferably 5 parts by mass or more, furthermore preferably 10 parts by mass or more from the viewpoint of high early strength of the hydraulic composition, and preferably 60 parts by mass or less, more preferably 55 parts by mass or less, further preferably 50 parts by mass or less from the viewpoint of strength of a hardened product of the hydraulic composition, relative to 100 parts by mass of the total of component (A) and component (B) in the hydraulic composition.

The content of component (B) in the hydraulic composition of the present invention is preferably 0.5 mass% or more, more preferably 1 mass% or more, further preferably 3 mass% or more from the viewpoint of high early strength of the hydraulic composition, and preferably 60 mass% or less, more preferably 55 mass% or less, further preferably 50 mass% or less from the viewpoint of strength of a hardened product of the hydraulic composition.

The hydraulic composition of the present invention contains component (C) in an amount of preferably 0.005 parts by mass or more, more preferably 0.01 parts by mass or more, further preferably 0.02 parts by mass or more, furthermore preferably 0.04 parts by mass or more from the viewpoint of high early strength of the hydraulic composition, and preferably 3 parts by mass or less, more preferably 1 part by mass or less, further preferably 0.5 parts by mass or less, furthermore preferably 0.3 parts by mass or less, furthermore preferably 0.1 parts by mass or less from the viewpoint of high early strength of the hydraulic composition, relative to 100 parts by mass of the total of component (A) and component (B) in the hydraulic composition.

The content of component (C) in the hydraulic composition of the present invention is preferably 0.003 mass% or more, more preferably 0.005 mass% or more, further preferably 0.01 mass% or more from the viewpoint of high early strength of the hydraulic composition, and preferably 3 mass% or less, more preferably 1 mass% or less, further preferably 0.5 mass% or less, furthermore preferably 0.3 mass% or less, furthermore preferably 0.1 mass% or less from the viewpoint of high early strength of the hydraulic composition.

In the hydraulic composition of the present invention, the mass ratio of the content of component (B) to the content of component (C) ((B)/(C)) is preferably 25 or more, more preferably 50 or more, further preferably 100 or more from the viewpoint of fluidity retention properties, and preferably 5,000 or less, more preferably 2,500 or less, further preferably 1,250 or less from the viewpoint of suppressing setting retardation.

The hydraulic composition of the present invention contains component (D) in an amount of preferably 0.01 parts by mass or more, more preferably 0.05 parts by mass or more, further preferably 0.1 parts by mass or more, furthermore preferably 0.35 parts by mass or more from the viewpoint of fluidity of a slurry of the hydraulic composition, and preferably 10 parts by mass or less, more preferably 3 parts by mass or less, further preferably 1 part by mass or less, furthermore preferably 0.75 parts by mass or less, furthermore preferably 0.5 parts by mass or less from the viewpoint of high early strength of the hydraulic composition, relative to 100 parts by mass of the total of component (A) and component (B) in the hydraulic composition.

The content of component (D) in the hydraulic composition of the present invention is preferably 0.01 mass% or more, more preferably 0.1 mass% or more, further preferably 0.4 mass% or more from the viewpoint of fluidity of a slurry of the hydraulic composition, and preferably 10 mass% or less, more preferably 3 mass% or less, further preferably 1 mass% or less, furthermore preferably 0.75 mass% or less, furthermore preferably 0.5 mass% or less from the same viewpoint.

In the hydraulic composition of the present invention, the mass ratio of the content of component (C) to the content of component (D) ((C)/(D)) is preferably 0.005 or more, more preferably 0.01 or more, further preferably 0.05 or more, furthermore preferably 0.08 or more from the viewpoint of fluidity of a slurry of the hydraulic composition, and preferably 50 or less, more preferably 10 or less, further preferably 0.5 or less, furthermore preferably 0.3 or less from the viewpoint of high early strength of the hydraulic composition.

### <Component (E)>

The hydraulic composition of the present invention can optionally contain (E) water [hereinafter referred to as component (E)].

Examples of the water of component (E) include, for example, tap water, industrial water, supernatant water, sludge water, groundwater, lake water, or river water.

When the hydraulic composition of the present invention includes component (E), the hydraulic composition of the present invention contains component (E) in an amount of preferably 10 parts by mass or more, more preferably 15 parts by mass or more, further preferably 20 parts by mass or more, furthermore preferably 25 parts by mass or more, furthermore preferably 30 parts by mass or more from the viewpoint of fluidity of a slurry of the hydraulic composition, and preferably 200 parts by mass or less, more preferably 100 parts by mass or less, further preferably 80 parts by mass or less, furthermore preferably 60 parts by mass or less, furthermore preferably 55 parts by mass or less, furthermore preferably 50 parts by mass or less, furthermore preferably 45 parts by mass or less from the viewpoint of strength development properties of the hydraulic composition, relative to 100 parts by mass of the total of component (A) and component (B) in the hydraulic composition.

When the hydraulic composition of the present invention includes component (E), the content of component (E) in the hydraulic composition of the present invention is preferably 10 mass% or more, more preferably 15 mass% or more, further preferably 20 mass% or more from the viewpoint of fluidity of a slurry of the hydraulic composition, and preferably 60 mass% or less, more preferably 50 mass% or less, further preferably 45 mass% or less from the viewpoint of strength development properties of the hydraulic composition.

### <Aggregate>

The hydraulic composition of the present invention can optionally contain an aggregate. Examples of the aggregate include aggregates selected from fine aggregates and coarse aggregates. Examples of the fine aggregates include those specified in No. 2311 of JIS A 0203-2014. Examples of the fine aggregates include river sand, land sand, pit sand, sea sand, lime sand, silica sand, and crushed sands thereof, blast furnace slag fine aggregate, ferronickel slag fine aggregate, lightweight fine aggregate (artificial and natural), and recycled fine aggregate, or the like. Further, examples of the coarse aggregates include those specified in No. 2312 of JIS A 0203-2014. Examples of the coarse aggregates include, for example, river gravel, land gravel, pit gravel, sea gravel, lime gravel, crushed stones thereof, blast furnace slag coarse aggregate, ferronickel slag coarse aggregate, lightweight coarse aggregate (artificial and natural), and recycled coarse aggregate, or the like. A mixture of different types, or a single type, of the fine aggregates and/or the coarse aggregates may be used.

When the hydraulic composition of the present invention is concrete, in other words, when it is a hydraulic composition containing component (A) to component (E), coarse aggregates, and fine aggregates, the amount of the coarse aggregates used is preferably 50% or more, more preferably 55% or more, further preferably 60% or more, and preferably 100% or less, more preferably 90% or less, further preferably 80% or less by bulk volume from the viewpoint of strength development properties of the hydraulic composition. The bulk volume is the ratio of the volume of the coarse aggregates (including voids) in 1 m³ of concrete.

Further, when the hydraulic composition is concrete, in other words, when it is a hydraulic composition containing component (A) to component (E), coarse aggregates, and fine aggregates, the amount of the fine aggregates used is preferably 500 kg/m³ or more, more preferably 600 kg/m³ or more, further preferably 700 kg/m³ or more, and preferably 1,000 kg/m³ or less, more preferably 900 kg/m³ or less from the viewpoint of strength development properties of the hydraulic composition.

When the hydraulic composition is mortar, in other words, when it is a hydraulic composition containing component (A) to component (E) and fine aggregates, the amount of the fine aggregates used is preferably 800 kg/m³ or more, more preferably 900 kg/m³ or more, further preferably 1,000 kg/m³ or more, and preferably 2,000 kg/m³ or less, more preferably 1,800 kg/m³ or less, further preferably 1,700 kg/m³ or less.

### <Defoamer>

The hydraulic composition of the present invention can optionally further contain a defoamer.

Preferable defoamers include silicone-based defoamers, fatty acid ester-based defoamers, and ether-based defoamers. The silicone-based defoamer is more preferably dimethylpolysiloxane, the fatty acid ester-based defoamer is more preferably a polyalkylene glycol fatty acid ester, and the ether-based defoamer is more preferably a polyalkylene glycol ether.

When the hydraulic composition of the present invention includes the defoamer, the hydraulic composition of the present invention contains the defoamer in an amount of preferably 0.00005 parts by mass or more, more preferably 0.0001 parts by mass or more, further preferably 0.0005 parts by mass or more from the viewpoint of strength development properties of the hydraulic composition, and preferably 0.05 parts by mass or less, more preferably 0.025 parts by mass or less, further preferably 0.0125 parts by mass or less from the viewpoint of fluidity of a slurry of the hydraulic composition, relative to 100 parts by mass of the total of component (A) and component (B) in the hydraulic composition.

When the hydraulic composition of the present invention includes the defoamer, the content of the defoamer in the hydraulic composition of the present invention is preferably 0.00005 mass% or more, more preferably 0.0001 mass% or more, further preferably 0.0005 mass% or more from the viewpoint of strength development properties of the hydraulic composition, and preferably 0.05 mass% or less, more preferably 0.025 mass% or less, further preferably 0.0125 mass% or less from the viewpoint of fluidity of a slurry of the hydraulic composition.

The hydraulic composition of the present invention may contain, as optional components, preservatives, early strength components for hydraulic compositions, hardening accelerators, hardening retarders, air-entraining agents, waterproofing agents, shrinkage reducing agents, rust inhibitors, crack reducing agents, pH adjusters, surfactants, or the like.

A hardened product obtained from the hydraulic composition of the present invention can be used, for example, for structures or concrete products. Examples of structures include, for example, main portions of reinforced concrete buildings or steel-reinforced concrete buildings, such as columns, beams, floor slabs, load-bearing walls, and the like, as well as civil engineering structures such as roads, bridges, bridge piers, girders, tunnels, waterways, dams, sewer systems, breakwaters, retaining walls, and the like. Examples of concrete products include, for example, vibration-molded products such as culverts, side ditches, segments, and the like, as well as centrifugal-molded products such as poles, piles, Hume pipes, and the like.

In an exemplary embodiment, the hydraulic composition of the present invention may be a hydraulic composition formulated with component (A), component (B), component (C), and component (D).

Further, in an exemplary embodiment, the hydraulic composition of the present invention may be a hydraulic composition formulated with component (A), component (B), component (C), component (D), and component (E).

Further, the hydraulic composition of the present invention may be further formulated with the above optional components.

The preferable contents of component (A), component (B), component (C), component (D), component (E), and other optional components in the hydraulic composition of the present invention can be construed and applied as formulation amounts of the respective components in the hydraulic composition of the present invention. Further, in the hydraulic composition of the present invention, the mass ratios between the contents of the respective components can be construed and applied as mass ratios between the formulation amounts of the respective components.

### [Method for producing hydraulic composition]

In an exemplary embodiment, the present invention provides a method for producing a hydraulic composition, including mixing the above component (A), component (B), component (C), and component (D).

In an exemplary embodiment, the method for producing a hydraulic composition of the present invention may be a method for producing a hydraulic composition, including mixing the above component (A), component (B), component (C), component (D), and component (E).

The aspects described for the hydraulic composition of the present invention can be appropriately applied to the method for producing a hydraulic composition of the present invention.

Component (A) to component (E), optional components, and preferable aspects of these components in the method for producing a hydraulic composition of the present invention are the same as in the aspects described for the hydraulic composition of the present invention.

In the method for producing a hydraulic composition of the present invention, the preferable contents of component (A) to component (E) described for the hydraulic composition of the present invention can be construed and applied as mixing amounts of the respective components, and can be construed and applied as mixing amounts used in mass ratios between the mixing amounts of the respective components, such as the mass ratio between the mixing amounts of component (C) and component (D) ((C)/(D)), or the like.

The method for producing a hydraulic composition of the present invention is not particularly limited, and examples thereof include an aspect in which a mixture obtained by mixing component (A), component (B), and component (C) is mixed with a mixture obtained by mixing component (D) and component (E).

For example, when component (A) is cement clinker or cement, more specifically cement clinker or Portland cement, the hydraulic composition can be produced by adding a mixed liquid obtained by mixing component (E) with component (D) to a mixed and ground mixture including the hydraulic powder, the mixture being obtained by mixing component (A), component (B), and component (C).

In the method for producing a hydraulic composition of the present invention, a mixing device used for mixing a mixture including component (A) to component (E) is not particularly limited, and examples thereof can include, for example, hand mixers, Hobart's mixers, vertical mixers, tilting drum mixers, pan mixers, twin-shaft mixers, ZCROSS mixers, or the like, which are commonly used for mixing cement or the like.

### <Strength enhancing agent for hydraulic composition containing (A) hydraulic powder and (B) calcined clay>

In an exemplary embodiment, the present invention provides a strength enhancing agent for a hydraulic composition containing (A) a hydraulic powder and (B) a calcined clay, the agent including a compound represented by the above general formula (c1) or a salt thereof (which is component (C)) (hereinafter referred to as the strength enhancing agent for a hydraulic composition of the present invention).

As used herein, strength enhancement of the hydraulic composition may refer to early strength enhancement of the hydraulic composition, namely, shortening the time required for the hydraulic composition to reach the second peak of the heat of hydration.

Preferable aspects of component (A), component (B), and component (C), i.e., a compound represented by the general formula (c1) or a salt thereof, in the strength enhancing agent for a hydraulic composition of the present invention are the same as in the aspects described for the hydraulic composition of the present invention.

Further, in the strength enhancing agent for a hydraulic composition of the present invention, the contents of component (A) and component (B) in the hydraulic composition are the same as the preferable contents of component (A) and component (B) described for the hydraulic composition of the present invention.

Further, the hydraulic composition can optionally contain one or more selected from component (D), component (E), and the optional components listed for the hydraulic composition of the present invention. Preferable aspects of these components and preferable contents thereof in the hydraulic composition are the same as in the preferable aspects described for the hydraulic composition of the present invention.

Component (C), i.e., a compound represented by the general formula (c1) or a salt thereof can be used in an amount of preferably 0.005 parts by mass or more, more preferably 0.01 parts by mass or more, further preferably 0.02 parts by mass or more, furthermore preferably 0.04 parts by mass or more from the viewpoint of high early strength of the hydraulic composition, and preferably 3 parts by mass or less, more preferably 1 part by mass or less, further preferably 0.5 parts by mass or less, furthermore preferably 0.3 parts by mass or less, furthermore preferably 0.1 parts by mass or less from the viewpoint of high early strength of the hydraulic composition, relative to 100 parts by mass of the total of component (A) and component (B) in the hydraulic composition.

Aspects of the present invention are illustrated below. The matters mentioned for the hydraulic composition, the method for producing a hydraulic composition, and the strength enhancing agent for a hydraulic composition of the present invention can be appropriately applied to these aspects.
<1>
   A hydraulic composition containing the following component (A), component (B), component (C), and component (D),
   component (A): a hydraulic powder [excluding those that fall under component (B)],
   component (B): a calcined clay,
   component (C): a compound represented by the following general formula (c1) or a salt thereof, 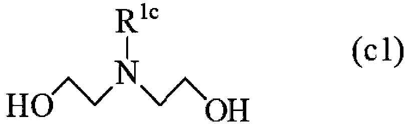
   wherein R^{1c} represents a hydrogen atom, a hydrocarbon group with 1 or more and 4 or less carbons, or a hydroxyalkyl group with 2 or more and 4 or less carbons, and
   component (D): a polycarboxylic acid-based dispersant.
<2>
   The hydraulic composition according to <1>, wherein component (A) is preferably cement clinker or cement, more preferably cement clinker or Portland cement.
<3>
   The hydraulic composition according to <1> or <2>, wherein component (B) is a clay mineral heat-treated in a high-temperature furnace under the conditions of 700°C or more and 1200°C or less and 1 hour or more and 24 hours or less, and the clay mineral is a mineral material exhibiting clayey properties, the clay mineral preferably including kaolinite or pyrophyllite.
<4>
   The hydraulic composition according to any of <1> to <3>, wherein component (C) is preferably one or more selected from 1-[bis(2-hydroxyethyl)amino]-2-propanol, N-methyldiethanolamine, triethanolamine, and diethanolamine, more preferably one or more selected from 1-[bis(2-hydroxyethyl)amino]-2-propanol, triethanolamine, and N-methyldiethanolamine.
<5>
   The hydraulic composition according to any of <1> to <4>, which contains component (A) in an amount of preferably 40 parts by mass or more, more preferably 45 parts by mass or more, further preferably 50 parts by mass or more, and preferably 99 parts by mass or less, more preferably 98 parts by mass or less, further preferably 95 parts by mass or less, furthermore preferably 90 parts by mass or less relative to 100 parts by mass of the total of component (A) and component (B) in the hydraulic composition.
<6>
   The hydraulic composition according to any of <1> to <5>, which contains component (B) in an amount of preferably 1 part by mass or more, more preferably 2 parts by mass or more, further preferably 5 parts by mass or more, furthermore preferably 10 parts by mass or more, and preferably 60 parts by mass or less, more preferably 55 parts by mass or less, further preferably 50 parts by mass or less relative to 100 parts by mass of the total of component (A) and component (B) in the hydraulic composition.
<7>
   The hydraulic composition according to any of <1> to <6>, which contains component (C) in an amount of preferably 0.005 parts by mass or more, more preferably 0.01 parts by mass or more, further preferably 0.02 parts by mass or more, furthermore preferably 0.04 parts by mass or more, and preferably 3 parts by mass or less, more preferably 1 part by mass or less, further preferably 0.5 parts by mass or less, furthermore preferably 0.3 parts by mass or less, furthermore preferably 0.1 parts by mass or less relative to 100 parts by mass of the total of component (A) and component (B) in the hydraulic composition.
<8>
   The hydraulic composition according to any of <1> to <7>, wherein the mass ratio of the content of component (B) to the content of component (C) ((B)/(C)) is preferably 25 or more, more preferably 50 or more, further preferably 100 or more, and preferably 5,000 or less, more preferably 2,500 or less, further preferably 1,250 or less.
<9>
   The hydraulic composition according to any of <1> to <8>, which contains component (D) in an amount of preferably 0.01 parts by mass or more, more preferably 0.05 parts by mass or more, further preferably 0.1 parts by mass or more, furthermore preferably 0.35 parts by mass or more, and preferably 10 parts by mass or less, more preferably 3 parts by mass or less, further preferably 1 part by mass or less, furthermore preferably 0.75 parts by mass or less, furthermore preferably 0.5 parts by mass or less relative to 100 parts by mass of the total of component (A) and component (B) in the hydraulic composition.
<10>
   The hydraulic composition according to any of <1> to <9>, further containing (E) water [hereinafter referred to as component (E)], wherein component (E) is contained in an amount of preferably 10 parts by mass or more, more preferably 15 parts by mass or more, further preferably 20 parts by mass or more, further preferably 25 parts by mass or more, furthermore preferably 30 parts by mass or more, and preferably 200 parts by mass or less, more preferably 100 parts by mass or less, further preferably 80 parts by mass or less, furthermore preferably 60 parts by mass or less, furthermore preferably 55 parts by mass or less, furthermore preferably 50 parts by mass or less, furthermore preferably 45 parts by mass or less relative to 100 parts by mass of the total of component (A) and component (B) in the hydraulic composition.
<11>
   A hydraulic composition formulated with the following component (A), component (B), component (C), and component (D),
   component (A): a hydraulic powder [excluding those that fall under component (B)],
   component (B): a calcined clay,
   component (C): a compound represented by the following general formula (c1) or a salt thereof, 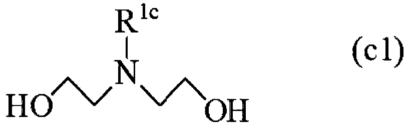
   wherein R^{1c} represents a hydrogen atom, a hydrocarbon group with 1 or more and 4 or less carbons, or a hydroxyalkyl group with 2 or more and 4 or less carbons, and
   component (D): a polycarboxylic acid-based dispersant.
<12>
   A method for producing a hydraulic composition, including mixing the following component (A), component (B), component (C), and component (D),
   component (A): a hydraulic powder [excluding those that fall under component (B)],
   component (B): a calcined clay,
   component (C): a compound represented by the following general formula (c1) or a salt thereof, 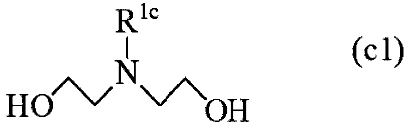
   wherein R^{1c} represents a hydrogen atom, a hydrocarbon group with 1 or more and 4 or less carbons, or a hydroxyalkyl group with 2 or more and 4 or less carbons, and
   component (D): a polycarboxylic acid-based dispersant.
<13>
   The method for producing a hydraulic composition according to <12>, wherein a mixture containing component (A), component (B), and component (C) is mixed with a mixture containing component (D) and (E) water.
<14>
   A strength enhancing agent for a hydraulic composition containing (A) a hydraulic powder and (B) a calcined clay, the agent including a compound represented by the following general formula (c1) or a salt thereof, 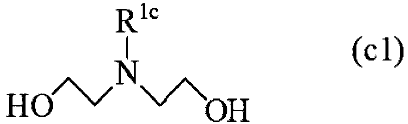 wherein R^{1c} represents a hydrogen atom, a hydrocarbon group with 1 or more and 4 or less carbons, or a hydroxyalkyl group with 2 or more and 4 or less carbons.

### Examples

### <Materials used>

<Component (A)>
   Ordinary Portland cement (average particle size 21.8 µm, manufactured by TAIHEIYO CEMENT CORPORATION)
<Component (B)>
   B-1: metakaolin, MetaMax (average particle size 5.2 µm, manufactured by SKW East Asia Ltd.)
   B-2: Kongo (Korean) Kaolin (average particle size 11.4 µm, manufactured by Kusaba Chemical.)
   B-3: Calcined Kaolin C (average particle size 11.6 µm, manufactured by Kusaba Chemical.)
<Component (C)>
   C-1: diethanolamine (manufactured by Tokyo Chemical Industry Co., Ltd.)
   C-2: triethanolamine (manufactured by Tokyo Chemical Industry Co., Ltd.)
   C-3: 1-[bis(2-hydroxyethyl)amino]-2-propanol (manufactured by Tokyo Chemical Industry Co., Ltd.)
   C-4: N-methyldiethanolamine (manufactured by Tokyo Chemical Industry Co., Ltd.)
<Component (C')>
   C'-1: triisopropanolamine (isomer mixture) (manufactured by Tokyo Chemical Industry Co., Ltd.)
<Component (D)>
   D-1: methacrylic acid/methoxypolyethylene glycol (25) methacrylate = 75/25 mol% copolymer sodium salt, weight average molecular weight 40,000
   D-2: methacrylic acid/methoxypolyethylene glycol (100) methacrylate = 85/15 mol% copolymer sodium salt, weight average molecular weight 40,000
   D-3: acrylic acid/polyethylene glycol (50) methacrylic ether = 85/15 mol% copolymer sodium salt, weight average molecular weight 40,000
<Component (E)>
   Tap water (Wakayama-shi, Wakayama)

### <Examples 1 and Comparative Example 1>

### (1) Grinding and mixing of hydraulic powder

The above component (A), component (B), and component (C) or component (C') were placed in a mixer (MX-X301, manufactured by Panasonic Corporation) in parts by mass shown in Table 1, stirred for 2 minutes, and then cooled to 20°C, thereby obtaining a mixture including the hydraulic powder.

### (2) Method for producing slurry of hydraulic composition

Using the mixture including the hydraulic powder prepared by the method in (1), the hydraulic composition of the present invention was prepared according to a mortar formulation shown below. Specifically, the mixture including the hydraulic powder prepared in (1) was mixed with other formulation components such that the total formulation amount of component (A) and component (B) was 400 g to prepare the hydraulic composition according to the mortar formulation shown below.

All materials were adjusted to 20°C, and the fine aggregate was adjusted to a saturated surface-dry state. Tests were conducted at 20°C. The formulation components were added in parts by mass shown in Table 1 and kneaded (60 rpm, 120 seconds) using a mortar mixer specified in JIS R 5201 to prepare the mortar. In the preparation, the mixture including the hydraulic powder prepared by the method in (1) was dry-mixed with the fine aggregate in advance and added. Component (D), component (E) (tap water), and the defoamer were premixed and added.

### <Mortar formulation>

· Mixture including the hydraulic powder prepared in (1): 400 g
· Fine aggregate: 700 g (sand, produced in Joyo, Kyoto, saturated surface-dry specific gravity 2.50 g/cm³)
· Tap water: 140 g or 220 g
· Defoamer: 0.05 g (Defoamer No. 21, manufactured by Kao Corporation)

### (3) Evaluation of setting retardation properties

20.0 g of the hydraulic composition prepared by the method described in (2) was sampled immediately after preparation, and the amount of heat of hydration (kJ/g) was measured using an isothermal calorimeter (TAM Air, manufactured by TA Instruments.) The time (minutes) required to reach the second peak of the heat of hydration was used as a setting time indicator. The results are shown in Table 1.

A shorter time required to reach the second peak of the heat of hydration indicates that the hydraulic composition has more alleviated setting retardation properties and superior early strength.

**[Table 1]**

| | | Hydraulic composition | | | | | | | | Evaluation |
|---|---|---|---|---|---|---|---|---|---|---|
| | | Component (A) | Component (B) | | Component (C) or component (C') | | Component (D) | | Componet (E) | Time to reach second peak of heat of hydration (min) |
| | | Formulation amount (parts by mass) | Type | Formulation amount (parts by mass) | Type | Formulation amount (parts by mass) | Type | Formulation amount (parts by mass) | Formulation amount (parts by mass) | |
| Example | 1-1 | 90 | B-1 | 10 | C-1 | 0.04 | D-1 | 0.35 | 35 | 708 |
| | 1-2 | 90 | B-1 | 10 | C-2 | 0.04 | D-1 | 0.35 | 35 | 684 |
| | 1-3 | 90 | B-1 | 10 | C-3 | 0.04 | D-1 | 0.35 | 35 | 643 |
| | 1-4 | 90 | B-1 | 10 | C-3 | 0.1 | D-1 | 0.35 | 35 | 646 |
| | 1-5 | 90 | B-1 | 10 | C-4 | 0.04 | D-1 | 0.35 | 35 | 684 |
| | 1-6 | 50 | B-1 | 50 | C-3 | 0.04 | D-1 | 0.5 | 55 | 280 |
| | 1-7 | 90 | B-1 | 10 | C-3 | 0.04 | D-2 | 0.35 | 35 | 555 |
| | 1-8 | 90 | B-1 | 10 | C-3 | 0.04 | D-3 | 0.35 | 35 | 605 |
| | 1-9 | 90 | B-2 | 10 | C-3 | 0.04 | D-1 | 0.35 | 35 | 673 |
| | 1-10 | 90 | B-3 | 10 | C-3 | 0.04 | D-1 | 0.35 | 35 | 722 |
| Comparative example | 1-1 | 90 | B-1 | 10 | C'-1 | 0.04 | D-1 | 0.35 | 35 | 737 |

| | | | | | | | | | | |
|---|---|---|---|---|---|---|---|---|---|---|
| Note 1: The formulation amount of each component (parts by mass) is the amount relative to 100 parts by mass of the total amount of component (A) and component (B). | | | | | | | | | | |

As shown in Table 1, the times required to reach the second peak of the heat of hydration in Examples 1-1 to 1-3 and 1-5 were shorter as compared with Comparative Example 1-1. This is considered to be because component (C) adsorbs onto the cationic sites on the surface of the cement's particles by the chelating effect, making it difficult for the excess cement dispersant to adsorb onto the cationic sites on the surface of the cement's particles, thereby making setting retardation less likely to occur due to the adsorption of the excess cement dispersant.

Further, since the hydraulic composition of Example 1-6 reached the second peak of the heat of hydration in an even shorter time, it can be suitably used as a water-stopping material, a hydraulic composition for paving applications requiring early opening to traffic, a hydraulic composition for emergency repair, a self-leveling agent, or the like.

## Claims

1. A hydraulic composition comprising the following component (A), component (B), component (C), and component (D),
component (A): a hydraulic powder [excluding those that fall under component (B)],
component (B): a calcined clay,
component (C): a compound represented by the following general formula (c1) or a salt thereof, 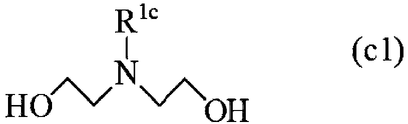
wherein R^{1c} represents a hydrogen atom, a hydrocarbon group with 1 or more and 4 or less carbons, or a hydroxyalkyl group with 2 or more and 4 or less carbons, and
component (D): a polycarboxylic acid-based dispersant.

2. The hydraulic composition according to claim 1, which comprises the component (B) in an amount of 1 part by mass or more and 60 parts by mass or less relative to 100 parts by mass of the total of the component (A) and the component (B).

3. The hydraulic composition according to claim 1 or 2, which comprises the component (C) in an amount of 0.005 parts by mass or more and 0.5 parts by mass or less relative to 100 parts by mass of the total of the component (A) and the component (B).

4. The hydraulic composition according to any one of claims 1 to 3, wherein the mass ratio of the content of the component (B) to the content of the component (C) ((B)/(C)) is 25 or more and 5,000 or less.

5. The hydraulic composition according to any one of claims 1 to 4, which comprises the component (D) in an amount of 0.01 parts by mass or more and 1 part by mass or less relative to 100 parts by mass of the total of the component (A) and the component (B).

6. The hydraulic composition according to any one of claims 1 to 5, further comprising (E) water, wherein the component (E) is contained in an amount of 15 parts by mass or more and 100 parts by mass or less relative to 100 parts by mass of the total of the component (A) and the component (B).

7. A hydraulic composition formulated with the following component (A), component (B), component (C), and component (D),
component (A): a hydraulic powder [excluding those that fall under component (B)],
component (B): a calcined clay,
component (C): a compound represented by the following general formula (c1) or a salt thereof, 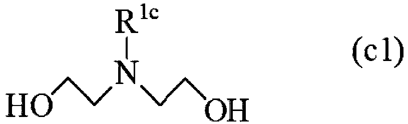
wherein R^{1c} represents a hydrogen atom, a hydrocarbon group with 1 or more and 4 or less carbons, or a hydroxyalkyl group with 2 or more and 4 or less carbons, and
component (D): a polycarboxylic acid-based dispersant.

8. A method for producing a hydraulic composition, comprising mixing the following component (A), component (B), component (C), and component (D),
component (A): a hydraulic powder [excluding those that fall under component (B)],
component (B): a calcined clay,
component (C): a compound represented by the following general formula (c1) or a salt thereof, 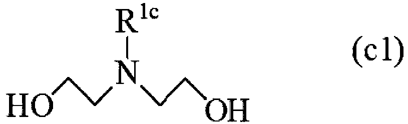
wherein R^{1c} represents a hydrogen atom, a hydrocarbon group with 1 or more and 4 or less carbons, or a hydroxyalkyl group with 2 or more and 4 or less carbons, and
component (D): a polycarboxylic acid-based dispersant.

9. The method for producing a hydraulic composition according to claim 8, wherein a mixture containing the component (A), the component (B), and the component (C) is mixed with a mixture containing the component (D) and (E) water.

10. A strength enhancing agent for a hydraulic composition containing (A) a hydraulic powder and (B) a calcined clay, the agent comprising a compound represented by the following general formula (c1) or a salt thereof, 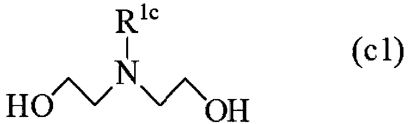 wherein R^{1c} represents a hydrogen atom, a hydrocarbon group with 1 or more and 4 or less carbons, or a hydroxyalkyl group with 2 or more and 4 or less carbons.
